# EUROPEAN PATENT APPLICATION

(11) **EP 4 793 327 A1**
(43) Date of publication of application: **19.08.2026**
(21) Application number: 23955572.5
(22) Date of filing: 20.12.2023
(51) Int. Cl.: C09D 127/06, C09D 7/40, C09D 7/61, C09D 5/00, C08K 9/10, C08K 7/18, C08K 3/013, C08K 5/23, C08J 9/10, B05D 7/12

(54) **COATING COMPOSITION FOR THERMO-SHIELDING AND SOUND ABSORPTION AND COATED STEEL SHEET HAVING EXCELLENT THERMO-SHIELDING AND SOUND ABSORPTION PERFORMANCE USING SAME**

(30) Priority: 11.10.2023 KR 20230135138
(71) Applicant: POSCO Co., Ltd, Gyeongsangbuk-do 37859 (KR)
(72) Inventor: LEE, Jung-Hwan, Gwangyang-si, Jeollanam-do 57807 (KR); KIM, Jin-Tae, Gwangyang-si, Jeollanam-do 57807 (KR); MIN, Kwang-Tai, Gwangyang-si, Jeollanam-do 57807 (KR); PAIK, Doo-Jin, Gwangyang-si, Jeollanam-do 57807 (KR)
(74) Representative: Meissner Bolte Partnerschaft mbB
(86) International application number: PCT/KR2023/021103
(87) International publication number: WO 2025/079785

(57) **Abstract**

The present invention relates to a coating composition for thermo-shielding and sound absorption and a coated steel sheet having excellent thermo-shielding and sound absorption performance using same and, more specifically, to a coating composition for thermo-shielding and sound absorption, a coated steel sheet using same, and a manufacturing method therefor, the coating composition comprising: a polyvinyl chloride resin; a plasticizer; a foaming capsule; and a ceramic-based thermo-shielding pigment, wherein the foaming capsule has a core-shell structure composed of a polymer shell and a foaming agent core.

## Description

### Technical Field

The present disclosure relates to a coating composition for thermal-shielding and sound absorption, and a coated steel sheet having excellent thermal-shielding and sound absorption, and more particularly, to a coating composition which has excellent heat blocking performance, reflection characteristics, and noise reduction characteristics, increases building heating/cooling efficiency by stably maintaining the excellent thermal-shielding performance and noise reduction characteristics for a long time and using as a building roofing material and the like, and may solve inconvenience caused by noise, and a coated steel sheet using the same.

### Background Art

In the past, in order to implement heat blocking performance, a thermal-shielding paint composition in which an organic solvent-based binder resin of an epoxy or acryl, urethane type is mixed with friction materials such as silica, bauxite, sand, and steel slag, a retroreflective hollow body, or the like was used.

However, the thermal-shielding paint composition as such uses organic solvents which has a strong odor and is harmful to the human body, and as the components evaporate, has problems of causing health deterioration and being not environmentally friendly.

In addition, though a paint composition which has been developed as an aqueous composition is less harmful to the human body, it may have poor coating film adhesion and cracks, and its coating film becomes very sticky in summer due to a high temperature to cause contamination.

Furthermore, the paint should be painted at or more than a certain thickness in millimeters, a drying time from minutes to hours is required, and thus, there is a limitation to application thereof to a steel sheet. Therefore, generally, for noise reduction, a noise absorbing plastic foam having a thickness of a few millimeters should be attached, and in this case, a separate attachment process is required, and the costs of using a plastic foam-shaped film are increasing. For example, Korean Patent Laid-Open Publication No. 10-2021-0180153 discloses a technology relating to a polyurethane foam composition for sound absorbing material having improved sound absorption performance.

Therefore, when a coating composition for a steel sheet which allows excellent thermal-shielding ability and sound absorption ability even in the case in which a coating is formed as a thin film is provided, the composition is expected to be usefully applied to the related art.

### Summary of Invention

### Technical Problem

An aspect of the present disclosure is to provide a coating composition for a steel sheet having excellent thermal-shielding ability and sound absorption ability.

Another aspect of the present disclosure is to provide a steel sheet having excellent thermal-shielding ability and sound absorption ability.

Still another aspect of the present disclosure is to provide a method for manufacturing a steel sheet having excellent thermal-shielding ability and sound absorption ability.

### Solution to Problem

According to an aspect of the present disclosure, a coating composition for thermal-shielding and sound absorption includes: a polyvinyl chloride resin; a plasticizer; a foaming capsule; and a ceramic-based thermal-shielding pigment, wherein the foaming capsule is a foaming capsule having a core-shell structure composed of a polymer shell and a foaming agent core.

According to another aspect of the present disclosure, a coated steel sheet having excellent thermal-shielding and sound absorption characteristics includes: a steel sheet; a pretreatment layer formed on at least one surface of the steel sheet; and a coating layer formed on the pretreatment layer, wherein the coating layer includes the coating composition for thermal-shielding and sound absorption of the present disclosure.

According to still another aspect of the present disclosure, a method for manufacturing a coated steel sheet having excellent thermal-shielding and sound absorption characteristics includes: forming a pretreatment layer on a steel sheet; and forming a coating layer on the pretreatment layer, wherein the forming of a coating layer includes: applying the coating composition for thermal-shielding and sound absorption of the present disclosure, and drying the applied composition.

### Advantageous Effects of Invention

A coating film formed by the coating composition of the present disclosure includes a thermal-shielding pigment and serves to radiate infrared rays from sunlight to block external heat, may express a noise reduction effect through fine pores produced by foaming, and furthermore, may minimize heat transfer. In addition, the coating film acts as insulation to prevent internal heat from escaping externally. Thus, the coating film may implement both an effect of contributing energy reduction by increasing energy efficiency for heating/cooling and a noise reduction effect against external impact. In addition, the coating film formed by the present disclosure shows high solar reflectance and very low thermal conductivity, has excellent noise characteristics, and may effectively provide a steel sheet requiring physical properties as such.

### Brief Description of Drawings

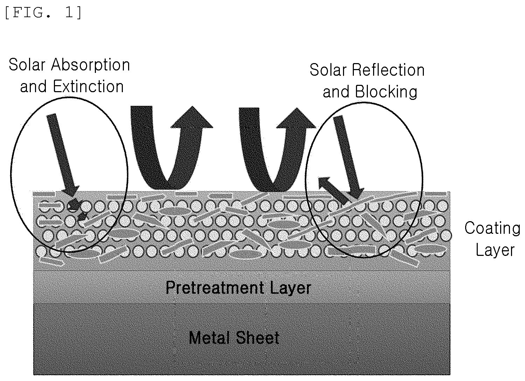

FIG. 1 schematically shows a heat blocking principle of the coating composition of the present disclosure, in which a solar absorption and reflection blocking action are schematically shown.
FIG. 2 is a schematic diagram which schematically shows test equipment for evaluating heat shielding performance.

### Best Mode for Invention

Hereinafter, preferred embodiments of the present disclosure will now be described in detail with reference to the accompanying drawings. However, the example embodiments of the present disclosure may be modified in many different forms and the scope of the disclosure should not be limited to the embodiments set forth herein.

The present disclosure relates to a coating composition having excellent heat blocking and noise reduction effects and a surface-treated steel sheet using the composition, and more particularly, to a technology capable of providing a surface-treated steel sheet having workability and corrosion resistance as well as excellent heat blocking, heat reflecting performance, and noise reduction characteristics, using the coating composition including a thermal-shielding/insulating pigment and a foaming agent in order to impart a heat blocking function of the steel sheet.

The coating composition for thermal-shielding and sound absorption of the present disclosure includes: a polyvinyl chloride resin; a plasticizer; a foaming capsule; and a ceramic-based thermal-shielding pigment, wherein the foaming capsule is a foaming capsule having a core-shell structure composed of a polymer shell and a foaming agent core.

It is preferred that the polyvinyl chloride resin of the present disclosure has a molecular weight of 5,000 to 8,000, and when the molecular weight is less than the range, workability is deteriorated, and when the molecular weight is more than the range, it is difficult to control a coated film thickness due to high viscosity.

Hereinafter, the contents of the components forming the composition of the present disclosure is written as a weight ratio based on the weight of the polyvinyl chloride resin, but the polyvinyl chloride resin is included in a range of 40 to 70 wt% based on the total weight of the coating composition, and the content may be adjusted depending on a working property and a coating film thickness. When the content of the polyvinyl chloride resin is less than 40 wt%, a resin content is insufficient, and heat blocking and noise reduction performance may be insufficient, and when the content is more than 70 wt%, viscosity is too high, and the working property may be unfavorable.

The coating composition includes 5 to 30 parts by weight of the plasticizer, 0.5 to 10 parts by weight of the foaming capsule, and 5 to 20 parts by weight of the thermal-shielding pigment, based on 100 parts by weight of the polyvinyl chloride resin, and for example, includes 15 to 25 parts by weight of the plasticizer, 1 to 5 parts by weight of the foaming capsule, and 6 to 15 parts by weight of the thermal-shielding pigment, based on 100 parts by weight of the polyvinyl chloride resin.

The plasticizer is included for flexibility and working property of a solution, when using the polyvinyl chloride resin, and when the content of the plasticizer is less than the range of the present disclosure, the viscosity of the solution including the polyvinyl chloride resin is too high, and the working property is deteriorated, but when content is more than the range of the present disclosure, viscosity is too low, the coating film is soft, and thus, it may be difficult to implement the characteristics.

Meanwhile, when the content range of the foaming capsule is less than the range of the present disclosure, pore formation is insignificant, and thermal-shielding and sound absorption performance may be insufficient, and when the content range is more than the range of the present disclosure, thermal-shielding and sound absorption performance may be rather degraded due to open cell formation and the like.

In addition, when the content range of the thermal-shielding pigment is less than the range of the present disclosure, thermal-shielding performance may be insufficient, and when the range is more than the range of the present disclosure, poor surface quality is caused by pigment precipitation or clumping.

The plasticizer which may be used in the present disclosure may be at least one selected from the group consisting of bis 2-ethylhexyl adipate (DEHA), dimethyl adipate (DMAD), monomethyl adipate (MMAD), dioctyl adipate (DOA), dibutyl sebacate (DMS), dibutyl maleate (DBM), diisobutyl maleate (DIBM), and trimethylpentanyl diisobutylate.

Meanwhile, the polymer shell of the foaming capsule of the present disclosure may be formed of at least one olefin resin selected from the group consisting of polypropylene and polyethylene, and use, for example, polypropylene.

The foaming agent core of the foaming capsule of the present disclosure may include at least one foaming agent selected from the group consisting of azodicarbonamide, azodicarboxylamide, benzenesulfonyl hydrazide, dinitrosopentamethylenetetramine, toluenesulfonyl hydrazide, azobisisobutyronitrile, barium azodicarboxylate, sodium bicarbonate, and p,p-oxybis(benzenesulfonyl hydrazide).

The foaming capsule in a core-shell powder form as in the present disclosure has a merit of forming closed pores which maintain a spherical shape when foamed.

Meanwhile, it is preferred that the foaming capsule has an average particle diameter of 5 to 20 µm, and when the average particle diameter of the foaming capsule is less than 5 µm, the size of the closed pores after foaming is too small, and it may be difficult to obtain a pore effect, and when the size is more than 20 µm, the size of the closed pores after foaming is excessively increased, and the surface quality of the coating film is deteriorated, or the physical properties of the coating film may be reduced.

The pigment which may be used in the present disclosure is preferably a ceramic-based thermal-shielding pigment, and for example, may be at least one selected from the group consisting of Fe₂O₃/MICA, TiO₂/MICA, TiO₂-Cr₂O₃, montmorillonite, illite, zeolite, SiO₂, and Al₂O₃. Meanwhile, an expression using "/" refers to, for example, in the case of Fe₂O₃/MICA, a form in which MICA is coated with a metal oxide of Fe₂O₃.

Though the thermal-shielding pigment of the present disclosure is not particularly limited, the average diameter may be in a range of 5 to 20 µm, and when the average diameter is less than 5 µm, the viscosity of a solution may be increased, and when the average diameter is more than 20 µm, solution stability may be decreased due to precipitation after dispersion.

Furthermore, the coating composition for thermal-shielding and sound absorption of the present disclosure may further include 5 to 20 parts by weight of a solvent based on 100 parts by weight of the polyvinyl chloride resin, and the solvent may be at least one selected from the group consisting of solvent naphtha, toluene, xylene, isopropanol, cellosolve, cellosolve acetate, and butyl cellosolve.

Meanwhile, according to another aspect of the present disclosure, a steel sheet having excellent thermal-shielding and sound absorption characteristics is provided using the coating composition of the present disclosure.

More specifically, the steel sheet having excellent thermal-shielding and sound absorption characteristics of the present disclosure includes: a steel sheet; a pretreatment layer formed on at least one surface of the steel sheet; and a coating layer formed on the pretreatment layer, wherein the coating layer includes the coating composition for thermal-shielding and sound absorption of the present disclosure.

The steel sheet may be selected from the group consisting of a carbon steel, an aluminum steel, an aluminum alloy steel, a stainless steel, a copper steel, a galvanized steel sheet, and a binary or ternary alloy plated steel sheet including zinc, and preferably, may be selected from a cold rolled steel sheet, a heat rolled steel sheet, a galvanized steel sheet, a zinc alloy plated steel sheet, a stainless steel sheet, and an aluminum steel sheet.

The coated steel sheet may include a pretreatment layer formed on at least one surface of the steel sheet, and the pretreatment layer which may be applied herein is for enhancing corrosion resistance of a metal sheet and coating film adhesion of the metal sheet and a coating film for thermal-shielding and noise reduction, and the pretreatment layer may be phosphate coating, chromate, or non-chromate chemical conversion coating-treated and preferably may be a chromium-free pretreatment layer.

According to another aspect of the present disclosure, a method for manufacturing a steel sheet having excellent thermal-shielding and sound absorption characteristics using the coating composition of the present disclosure is provided.

More specifically, a method for manufacturing a steel sheet having excellent thermal-shielding and sound absorption characteristics includes: forming a pretreatment layer on a steel sheet; and forming a coating layer on the pretreatment layer, wherein the forming of a coating layer includes: applying the coating composition for thermal-shielding and sound absorption of the present disclosure described above, and drying the applied composition.

The forming of a pretreatment layer is performed with a thickness of 0.1 to 2 µm, and when the thickness of the pretreatment layer is less than 0.1 µm, adhesion to the coating layer of the present disclosure may be insufficient, and when more than 2 µm, economic feasibility is reduced due to an increase in manufacturing costs.

Meanwhile, the applying of the coating composition is performed with a thickness of 40 µm to 200 µm, and when the thickness is less than 40 µm, coating film performance expression formed by the coating composition may be insufficient, and when more than 200 µm, economic feasibility is reduced due to an increase in manufacturing costs.

The drying of the coating composition is performed at a temperature of 195 to 235°C, for example, 200 to 225°C, and when the drying is performed, the foamed pores of the coating composition of the present disclosure may be formed from the foaming capsule. More specifically, when drying and curing are performed under the temperature conditions of the present disclosure, the foaming capsule is foamed to form pores. When the drying and curing temperatures are lower than 195°C, a reaction degree of the foaming capsule is weak, the average particle diameter of the foamed pores is decreased or the number of foamed pores is decreased, and thus, it may be difficult to obtain the effects of noise blocking and insulation of pores. However, when the temperature is higher than 235°C, a polymer film surrounding the foaming capsule is melted at a high temperature to destroy the foamed pores, and thus, it may be difficult to implement the required characteristics.

The coating composition provided by the present disclosure has a rapid drying time so that it may be applied to a coating process of the steel sheet, and may provide a surface-treated steel sheet having high durability to stably maintain excellent thermal-shielding and insulating performance and noise reduction characteristics for a long time. Therefore, the absorption of solar heat and temperature rise of a roofing material made of the steel sheet manufactured by the present disclosure may be suppressed, and an effect of reducing external impact noise may also be expressed.

Hereinafter, the present disclosure will be described in detail through the specific examples. The following example is only illustrative for assisting in the understanding of the present disclosure, and the scope of the present disclosure is not limited thereto.

### Mode for Invention

### Example

### 1. Preparation of coating composition

### Example 1

100 g of a polyvinyl chloride resin as a polymer resin, 20 g of bis 2-propylheptyl phthalate (DPHP) as a plasticizer, 2 g of a foaming capsule, 4 g of a thermal-shielding pigment Fe2O3-MICA, 4 g of montmorillonitrile, 5 g of a light grey pigment (Stuc-O-flex 312 pigment) as an additive, and 10 g of a solvent (Solvent naphtha) were added and stirred to prepare a coating composition. At this time, a foaming capsule having an average particle diameter of 10 to 15 µm including an azodicarbonamide foaming agent inside the outer shell formed of polypropylene as the foaming capsule.

### Example 2

A coating composition was prepared in the same manner as in Example 1, except that the amount of the foaming capsule in the coating composition was changed to 4 g.

### Comparative Example 1

A coating composition was prepared in the same manner as in Example 1, except that the thermal-shielding pigment was excluded from the coating composition.

### Comparative Example 2

A coating composition was prepared in the same manner as in Example 1, except that the foaming capsule was excluded from the coating composition.

### 2. Manufacture of coated steel sheet

### Manufacturing Example 1

The coating composition of Example 1 prepared in 1. was painted on a metal sheet-galvanized steel sheet having a size of 20×20 cm. At this time, NCF-200P available from Daehan Parkerizing as a chromium-free solution was treated with a thickness of about 1 µm as a pretreatment, and then the coating composition was applied on one surface with a thickness of 50 µm. At this time, the painting method was performed by a bar coating method # No. 25, and a drying temperature was 224°C which is a manufacturing temperature in an actual production line for 30 seconds. After the drying, the coating film of the coating composition swelled to about 3 times its original size due to foaming.

### Manufacturing Example 2

A coated metal sheet was manufactured in the same manner as in Manufacturing Example 1, except that the coating composition of Example 1 was applied with a thickness of 100 µm.

### Manufacturing Example 3

A coated metal sheet was manufactured in the same manner as in Manufacturing Example 1, except that the coating composition of Example 1 was applied with a thickness of 150 µm.

### Manufacturing Example 4

A coated metal sheet was manufactured in the same manner as in Manufacturing Example 1, except that the coating composition of Example 2 was used.

### Comparative Manufacturing Example 1

A coated metal sheet was manufactured in the same manner as in Manufacturing Example 1, except that the coating composition of Comparative Example 1 was used.

### Comparative Manufacturing Example 2

A coated metal sheet was manufactured in the same manner as in Manufacturing Example 1, except that the coating composition of Comparative Example 2 was used. Coating film swelling did not occur due to exclusion of the foaming capsule.

### Comparative Manufacturing Example 3

A coated metal sheet was manufactured in the same manner as in Manufacturing Example 1, except that the coating composition of Example 1 was dried at 190°C for 30 seconds. Foaming was insufficient since the foaming temperature was not sufficient during the drying.

### Comparative Manufacturing Example 4

A coated metal sheet was manufactured in the same manner as in Manufacturing Example 1, except that the coating composition of Example 1 was dried at 240°C for 30 seconds.

### Comparative Manufacturing Example 5

A coated metal sheet was manufactured in the same manner as in Manufacturing Example 1, except that the coating film composition of Example 1 was coated with a thickness of 30 µm.

### Comparative Manufacturing Example 6

An existing general color coated steel sheet (product of POSCO STEELEON) having a size of 20×20 cm which is commercially mass produced and sold was used, and this is a color coated steel sheet formed of a pretreatment layer of 1 µm, a 5 µm primer layer of a polyester resin, and a 20 µm color coated layer of a polyester resin.

### 3. Characteristics evaluation criteria of coated metal sheet

### (1) Salt spray test

In the salt spray test, an X-cut scribe was made with a razor blade within a 5 × 10 cm area on both a flat portion and an end portion of a coated specimen to expose the plated layer. A 5% NaCl solution was sprayed onto the specimen at a temperature of 35°C to evaluate corrosion resistance. After 480 hours of exposure, the ratio of the corroded surface area to the total surface area of the coated metal sheet was determined, and the swelling and peeling length of the coating film from the scribe line were measured to assess the degree of corrosion.
[⊚]: after 480 hours, corrosion of less than 5% of the total surface area of the coated metal sheet or peeling length of 1 mm or less from the scribe line,
[○]: after 480 hours, corrosion of 5% or more of the total surface area of the coated metal sheet or peeling length of 2 mm or less from the scribe line,
[Δ]: after 480 hours, corrosion of 5% or more of the total surface area of the coated metal sheet or peeling length of 3 mm or more from the scribe line.

### (2) Heat blocking performance evaluation

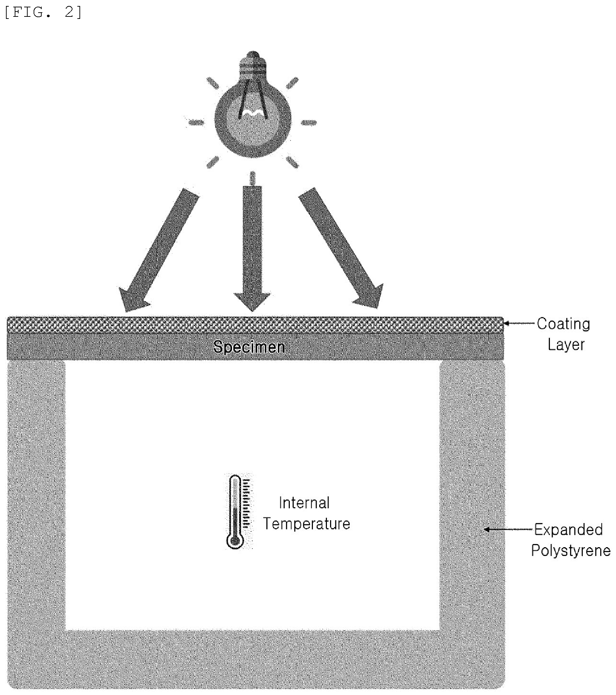

In the heat blocking performance evaluation, as schematically shown in FIG. 2, a measurement device for fixing the specimen of the manufacturing example or the comparative manufacturing example was made on the roof of an expanded polystyrene house, and a 500-watt incandescent light bulb was installed on the device. The specimen was placed on a tetragonal expanded polystyrene box, and the incandescent light bulb was lighted for 1 hour while the coating layer was directed toward the heated part of the incandescent light bulb, thereby measuring an internal temperature. The comparison was performed based on the internal temperature after lighting of the 0.6 T untreated galvanized steel sheet for 1 hour:
[⊚]: a difference between the internal temperature of a basis material and the internal temperature of the specimen of 5°C or more,
[○]: a difference between the internal temperature of a basis material and the internal temperature of the specimen of 2°C or more and 4°C or less,
[Δ]: a difference between the internal temperature of a basis material and the internal temperature of the specimen of less than 2°C.

### (3) Solar reflectance index evaluation

The solar reflectance index is an indicator showing an ability of a material surface to return solar energy to the atmosphere based on the test method shown in ASTM E1980, and as the solar reflectance index is higher, external heat is reflected, and it may be determined that heat blocking effect is excellent, thereby evaluating the solar reflectance index of the specimen:
[⊚]: solar reflectance index of 75 or more,
[○]: solar reflectance index of 50 or more and less than 75,
[Δ]: solar reflectance index of less than 50.

### (4) Noise reduction performance evaluation

For noise reduction performance evaluation, an iron ball having a weight of 5 g was freely fallen from a height of 150 mm to measure an impact noise on the coated surface, thereby evaluating the noise reduction performance. The nose measurement value was averaged after repeating the measurement 3 times, respectively. Through relative comparison, the numerical values were compared based on 86 dB which was the average value of the impact noise measurements of a 0.6 T untreated galvanized steel sheet which was not coated with anything:
[⊚]: Noise reduction of 10 dB or more,
[○]: Noise reduction of 5 dB or more and less than 10 dB,
[Δ]: Noise reduction of less than 5 dB.

### (5) Bendability test

Peeling or cracks of the curved area of the coating film were evaluated through the 3 T workability evaluation at an angle of 180°:
[⊚]: no peeling or cracks,
[○]: no peeling, fine crack occurrence,
[Δ]: peeling and crack occurrence.

**[Table 1] Results of characteristics evaluation of coated metal sheet**

| Classification | Brine spray test | Heat blocking performance evaluation | Noise reduction evaluation | Solar reflectance index (SRI) | Bendability test | Coating film thickness after drying |
|---|---|---|---|---|---|---|
| Manufacturing Example 1 | ⊚ | ⊚ | ⊚ | ⊚ | ⊚ | 150 *µ*m |
| Manufacturing Example 2 | ⊚ | ⊚ | ⊚ | ⊚ | ⊚ | 260 *µ*m |
| Manufacturing Example 3 | ⊚ | ⊚ | ⊚ | ⊚ | ○ | 400 *µ*m |
| Manufacturing Example 4 | ⊚ | ⊚ | ⊚ | ⊚ | ⊚ | 180 *µ*m |
| Comparative Manufacturing Example 1 | ⊚ | Δ | ⊚ | Δ | ⊚ | 155 *µ*m |
| Comparative Manufacturing Example 2 | ⊚ | Δ | Δ | ⊚ | ⊚ | 40 *µ*m |
| Comparative Manufacturing Example 3 | O | Δ | Δ | ○ | ○ | 115 *µ*m |
| Comparative Manufacturing Example 4 | ○ | Δ | Δ | ⊚ | Δ | 125 *µ*m |
| Comparative Manufacturing Example 5 | ⊚ | Δ | ○ | ⊚ | ⊚ | 93 *µ*m |
| Comparative Manufacturing Example 6 | ○ | Δ | Δ | Δ | ⊚ | 25 *µ*m |

While example embodiments have been shown and described above, it will be apparent to those skilled in the art that modifications and variations could be made without departing from the scope of the present disclosure as defined by the appended claims.

## Claims

1. A coating composition for thermal-shielding and sound absorption comprising: a polyvinyl chloride resin; a plasticizer; a foaming capsule; and a ceramic-based thermal-shielding pigment,
wherein the foaming capsule is a foaming capsule having a core-shell structure composed of a polymer shell and a foaming agent core.

2. The coating composition for thermal-shielding and sound absorption of claim 1, wherein the coating composition includes 5 to 30 parts by weight of the plasticizer, 0.5 to 10 parts by weight of the foaming capsule, and 5 to 20 parts by weight of the thermal-shielding pigment, based on 100 parts by weight of the polyvinyl chloride resin.

3. The coating composition for thermal-shielding and sound absorption of claim 1, wherein the plasticizer is at least one selected from the group consisting of bis 2-ethylhexyl adipate (DEHA), dimethyl adipate (DMAD), monomethyl adipate (MMAD), dioctyl adipate (DOA), dibutyl sebacate (DMS), dibutyl maleate (DBM), diisobutyl maleate (DIBM), and trimethylpentanyl diisobutylate.

4. The coating composition for thermal-shielding and sound absorption of claim 1, wherein the polymer shell of the foaming capsule is formed of at least one olefin resin selected from the group consisting of polypropylene and polyethylene.

5. The coating composition for thermal-shielding and sound absorption of claim 1, wherein the foaming agent core of the foaming capsule includes at least one foaming agent selected from the group consisting of azodicarbonamide, azodicarboxylamide, benzenesulfonyl hydrazide, dinitrosopentamethylenetetramine, toluenesulfonyl hydrazide, azobisisobutyronitrile, barium azodicarboxylate, sodium bicarbonate, and p,p-oxybis(benzenesulfonyl hydrazide).

6. The coating composition for thermal-shielding and sound absorption of claim 1, wherein the foaming capsule has an average particle diameter of 5 to 20 µm.

7. The coating composition for thermal-shielding and sound absorption of claim 1, wherein the ceramic-based thermal-shielding pigment is at least one selected from the group consisting of Fe₂O₃/MICA, TiO₂/MICA, TiO₂-Cr₂O₃, montmorillonite, illite, zeolite, SiO₂, and Al₂O₃.

8. The coating composition for thermal-shielding and sound absorption of claim 1, further comprising 5 to 20 parts by weight of a solvent based on 100 parts by weight of the polyvinyl chloride resin.

9. The coating composition for thermal-shielding and sound absorption of claim 8, wherein the solvent is at least one selected from the group consisting of solvent naphtha, toluene, xylene, isopropanol, cellosolve, cellosolve acetate, and butyl cellosolve.

10. A coated steel sheet having excellent thermal-shielding and sound absorption characteristics comprising:
a steel sheet;
a pretreatment layer formed on at least one surface of the steel sheet; and
a coating layer formed on the pretreatment layer,
wherein the coating layer includes the coating composition for thermal-shielding and sound absorption of any one of claims 1 to 9.

11. The coated steel sheet having excellent thermal-shielding and sound absorption characteristics of claim 10, wherein the steel sheet is selected from the group consisting of a carbon steel, an aluminum steel, an aluminum alloy steel, a stainless steel, a copper steel, a galvanized steel sheet, and a binary or ternary alloy plated steel sheet including zinc.

12. The coated steel sheet having excellent thermal-shielding and sound absorption characteristics of claim 10, wherein the pretreatment layer is phosphate coating, chromate, or non-chromate chemical conversion coating-treated.

13. A method for manufacturing a coated steel sheet having excellent thermal-shielding and sound absorption characteristics, the method comprising:
forming a pretreatment layer on a steel sheet; and
forming a coating layer on the pretreatment layer,
wherein the forming of a coating layer includes:
applying the coating composition for thermal-shielding and sound absorption of any one of claims 1 to 9, and
drying the applied composition.

14. The method for manufacturing a coated steel sheet having excellent thermal-shielding and sound absorption characteristics of claim 13, wherein the forming of a pretreatment layer is performed with a thickness of 0.1 to 2 µm.

15. The method for manufacturing a coated steel sheet having excellent thermal-shielding and sound absorption characteristics of claim 13, wherein the applying of the coating composition is performed at a thickness of 40 µm to 200 µm.

16. The method for manufacturing a coated steel sheet having excellent thermal-shielding and sound absorption characteristics of claim 13, wherein the drying of the coating composition is performed at a temperature of 195 to 235°C.
